Europäisches Patentamt

European Patent Office

Office européen des brevets

(11) Veröffentlichungsnummer : **0 177 992**
B1

(12) **EUROPÄISCHE PATENTSCHRIFT**

(45) Veröffentlichungstag der Patentschrift :
21.12.88

(51) Int. Cl.⁴ : **B 65 B   9/20**, B 29 C 53/52

(21) Anmeldenummer : 85201407.5

(22) Anmeldetag : 06.09.85

(54) Verfahren und Vorrichtung zum Herstellen von Verpackungsschläuchen aus Kunststoffolien.

(30) Priorität : 29.09.84 DE 3435948

(43) Veröffentlichungstag der Anmeldung :
16.04.86 Patentblatt 86/16

(45) Bekanntmachung des Hinweises auf die Patenterteilung : 21.12.88 Patentblatt 88/51

(84) Benannte Vertragsstaaten :
AT CH DE FR GB IT LI NL SE

(56) Entgegenhaltungen :
EP-A- 0 068 578
DE-A- 2 137 576
FR-A- 1 422 754

(73) Patentinhaber : Niedecker, Herbert, Dipl.-Ing.
Am Ellerhang 6
D-6240 Königstein 2 (DE)

(72) Erfinder : Niedecker, Herbert, Dipl.-Ing.
Am Ellerhang 6
D-6240 Königstein 2 (DE)

(74) Vertreter : Fischer, Ernst, Dr.
Neumannstrasse 88
D-6000 Frankfurt am Main 50 (DE)

## Beschreibung

Die Erfindung betrifft ein Verfahren und eine Vorrichtung zum Herstellen von Verpackungsschläuchen aus Kunststoffolienbahnen, bei dem die Folie über eine Formeinrichtung zum Schlauch mit überlappenden Rändern gebildet und diese anschließend verschweißt werden, wobei der gebildete Verpackungsschlauch diskontinuierlich abgeführt und dafür das Folientransportsystem ein- und ausgeschaltet wird.

Ein solches Verfahren und eine solche Vorrichtung (entsprechen den Oberbegriffe der Ansprüche 1 bzw. 3) sind aus der EP-A-68 578 bekannt.

Es ist weiters bekannt (DT-OS 14 11 489), zur Herstellung von Verpackungsschläuchen aus Kunststoffolien das hierfür benötigte Folienmaterial von einer Rolle abzuziehen und über eine Formschulter zu einem Schlauch mit überlappenden Kanten zu bilden, die anschließend verschweißt werden. Die so gebildeten Verpackungsschläuche werden abgezogen und unmittelbar oder in einem getrennten Arbeitsvorgang meistens mit Wurstbrät gefüllt und anschließend verschlossen. Zum Verschweißen wird ein der Folie entsprechendes Schweißverfahren eingesetzt, z. B. Ultraschallschweißung, Bochfrequenzschweißung oder thermische Schweißung.

Nach dem Verschweißen der überlappenden Kanten des Verpackungsschlauches ist häufig ein diskontinuierlicher Abtransport des verschweißten Verpackungsschlauches und damit ein Ein- und Ausschalten des Folientransportsystems vorgesehen, z. B. für die Bildung eines Schlauchvorrats (EP-OS 68 578). In diesen Fällen werden das Transportsystem und die Schweißeinrichtung jeweils ein- und wieder ausgeschaltet. Hierbei hat sich gezeigt, daß beim gleichzeitigen Einschalten von Transport- und Schweißaggregat die Folie häufig durchgeschweißt wurde. Beim gleichzeitigen Abschalten des Transport- und des Schweißaggregats ergab sich häufig ein nicht geschweißter Bereich. Aus diesen Bereichen kann beim Füllen z. B. von Därmen Wurstbrät austreten oder ein Weiterreißen der Schweißnaht eintreten.

Der Erfindung liegt die Aufgabe zugrunde, diese Nachteile zu vermeiden. Es ist nun bekannt, beim Schweißen von Kunststoffbahnen im kontinuierlichen Betrieb die Schweißenergie der Geschwindigkeitszunahme oder -abnahme anzupassen (DE-OS 21 09 321). Hieraus ergibt sich keine Anregung zur Lösung dieser Aufgabe. Die Lösung dieser Aufgabe beruht vielmehr auf der Erkenntnis, daß bei der diskontinuierlichen Arbeitsweise infolge der Trägheit des mechanischen Transportsystems beim Anlaufen oder beim Abstellen infolge der unmittelbaren Wirkung des gleichzeitigen An- oder Abstellens des Schweißaggregats die Schweißenergie beim Anstellen des Transportaggregats zu stark auf einen kleinen Bereich wirkt; beim Abstellen des Transportaggregats gibt die Schweißeinrichtung keine Schweißenergie mehr auf den unter der Schweißeinrichtung befindlichen Bereich der überlappenden Folienränder ab, wodurch dieser Bereich unverschweißt bleibt.

Die der Erfindung zugrundeliegende Aufgabe wird dadurch gelöst, daß bei einem Verfahren der eingangs beschriebenen Art beim Einschalten des Transport- und des Schweißaggregats das Einschalten der Schweißenergie über einen Zeitraum bis etwa 20 ms verzögert wird, und daß beim Ausschalten des Transportaggregats das Ausschalten des Schweißaggregats über den gleichen Zeitraum verzögert wird.

Die Verzögerung des Einschaltens des Schweißaggregats erfolgt durch eine Zeitschaltung in der Weise, daß nach dem beginnenden Anlaufen des Folientransports die Schweißenergie verzögert wird, aber in voller Höhe einwirkt. Dabei entsteht ein kleiner Bereich in der Größenordnung von 1 mm, dem nicht die volle Schweißenergie zugeführt worden ist, der aber trotzdem noch für die Weiterverarbeitung ausreichend verschweißt ist. Die Verzögerung des Ausschaltens des Schweißaggregats beim Abschalten des Transportaggregats hat zur Folge, daß der vom Nachlauf des Transportaggregats betroffene Bereich der zu verschweißenden Folie noch die volle Schweißenergie erhält, ohne dabei die Folie durchzuschweißen. Die Zeitspanne der Verzögerung des Ein- und Ausschaltens der Schweißenergie ist abhängig sowohl vom Folienmaterial als auch dessen Transportgeschwindigkeit; sie liegt im Bereich bis etwa 20 ms. Die Verzögerung des Ein- und Ausschaltens der Schweißenergie erfolgt am besten durch einstellbare Zeitschaltung.

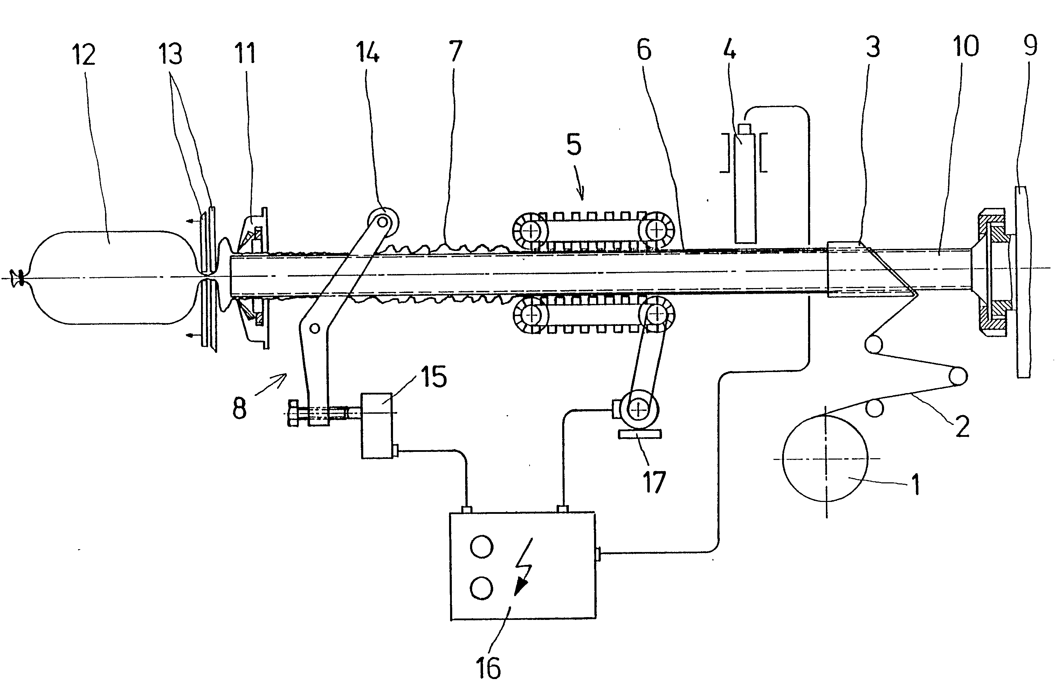

Die Durchführung des erfindungsgemäßen Verfahrens wird anhand der Zeichnung wie folgt erläutert.

Die Zeichnung zeigt eine schematische Darstellung einer Folienschweißmaschine mit Verstärkung oder Verringerung der Schweißenergie beim Anlaufen und Anhalten des Folientransports. Von der Folienrolle 1 läuft die Flachfolie 2 zur Formeinrichtung 3, die aus der Flachfolie 2 einen Schlauch 6 mit überlappenden Längskanten bildet. Diese überlappenden Längskanten werden durch eine Schweißeinrichtung 4 zusammengeschweißt, wobei die Schweißenergie auf einen Bereich von etwa 5 mm gebündelt wird. Die Transporteinrichtung 5 zieht den geschweißten Schlauch 6 ab und bildet einen Schlauchvorrat 7, der von dem Überwachungssystem 8 kontrolliert wird. Die Füllmasse, die von dem Füller 9 durch das Füllrohr 10 gedrückt wird, zieht den Schlauch 6 durch die Darmbremse aus dem Darmvorrat 7 ab und bildet die Wurst 12, die durch ein Verdränger- und Verschließsystem 13 verschlossen wird.

Sobald der Schlauchvorrat 7 die Rolle 14 anhebt, wird der Schalter 15 betätigt, der einen AUS-Impuls an das Steuergerät 16 weiterleitet. Vom Steuergerät 16 wird der Motor 17 der Transporteinrichtung 5 sofort ausgeschaltet.

Ein Zeitrelais zum verzögerten Ein- und Ausschalten ist im Steuergerät 16 untergebracht. Der Zeitraum der Verzögerung — bis etwa 20 ms —

wird von Hand in Abhängigkeit von der Beschaffenheit des Materials für die Flachfolie und der Transportgeschwindigkeit eingestellt. Diese Werte werden empirisch für jedes Folienmaterial ermittelt.

## Patentansprüche

1. Verfahren zum Herstellen von Verpackungsschläuchen aus Kunststoffolien, bei dem die Folie 2 über eine Formeinrichtung 3 zum Schlauch 6 mit überlappenden Rändern gebildet und diese anschließend verschweißt werden, wobei der gebildete Verpackungsschlauch 6 diskontinuierlich abgeführt und dafür das Folientransportsystem ein- und ausgeschaltet wird, dadurch gekennzeichnet, daß beim Einschalten des Transport- und des Schweißaggregats 5, 4 das Einschalten der Schweißenergie über einen Zeitraum bis etwa 20 ms verzögert wird, und daß beim Ausschalten des Transportaggregats 5 das Ausschalten des Schweißaggregats 4 über den gleichen Zeitraum bis etwa 20 ms verzögert wird.

2. Verfahren nach Anspruch 1, dadurch gekennzeichnet, daß die Verzögerung des Ein- und Ausschaltens der Schweißenergie durch die einstellbare Zeitschaltung 16 erfolgt.

3. Vorrichtung zur Durchführung des Verfahrens nach Anspruch 1 und 2, bestehend aus einer Folienrolle 1, einer Formeinrichtung 3, auf der die Flachfolie 2 zu einem Schlauch 6 mit überlappenden Längskanten gebildet wird, einem Schweißaggregat 4 und einem Transportaggregat 5 zum Abziehen des geschweißten Schlauches 6 gekennzeichnet durch ein Schaltelement 15 zum Ein- oder Ausschalten des Transport- und des Schweißaggregats 5, 4 über ein Steuergerät 16, das mit einer Verzögerung bis etwa 20 ms nach dem Einschalten oder Ausschalten des Transportaggregats 5 die volle Schweißenergie für das Schweißaggregat 4 einschaltet oder abschaltet.

## Claims

1. Process for producing packaging tubes made of plastics films, in which the film 2 is formed into a tube 6 with overlapping edges by a forming device 3 and said edges are subsequently welded, the packaging tube 6 being removed discontinuously, and the film transport system being switched on and off for this purpose, characterised in that on switching on the transport and the welding unit 5, 4 the switching-on of the welding energy is delayed for a period of up to approximately 20 ms, and that on switching off the transport unit 5 the switching-off of the welding unit 4 is delayed for the same period of up to approximately 20 ms.

2. Process according to Claim 1, characterised in that the delay in the switching-on and -off of the welding energy is produced by the adjustable time circuit 16.

3. Apparatus for carrying out the process according to Claims 1 and 2, consisting of a roll of film 1, a forming device 3, on which the flat film 2 is formed into a tube 6 with overlapping longitudinal edges, a welding unit 4 and a transport unit 5 for removing the welded tube 6, characterised by a switching element 15 for switching on or off the transport and the welding unit 5, 4 by a control device 16, which switches on or switches off the full welding energy for the welding unit 4 with a delay of up to approximately 20 ms after switching on or switching off the transport unit 5.

## Revendications

1. Procédé de fabrication d'emballages tubulaires en feuilles de matière plastique, qui consiste à conformer les feuilles (2) par un dispositif de conformation (3) en l'emballage tubulaire (6) à bords à recouvrement et à souder ensuite ceux-ci, l'emballage tubulaire (6) formé étant évacué d'une manière discontinue et le système de transport des feuilles étant à cet effet branché et débranché, caractérisé en ce qu'il consiste à retarder lors du branchement de l'équipement de transport et de soudage (5, 4) le branchement de l'énergie de soudage pendant une durée allant jusqu'à 20 ms environ et à retarder, lors du débranchement de l'équipement de transport (5), le débranchement de l'équipement de soudage (4) pendant la même durée allant jusqu'à 20 ms environ.

2. Procédé suivant la revendication 1, caractérisé en ce qu'il consiste à retarder le branchement et le débranchement de l'énergie de soudage par le circuit de temporisation (16) réglable.

3. Dispositif pour la mise en oeuvre du procédé suivant la revendication 1 ou 2, constitué d'un rouleau à feuille (1), d'un dispositif de conformation (3) sur lequel la feuille plate (2) est conformée en un emballage tubulaire (6) à bords longitudinaux à recouvrement, d'un équipement de soudage (4) et d'un équipement de transport (5) pour évacuer l'emballage tubulaire (6) soudé, caractérisé par un élément de commutation (15) pour brancher ou pour débrancher l'équipement de transport et de soudage (5, 4) par l'intermédiaire d'un appareil de commande (16) qui branche ou qui débranche toute l'énergie de soudage pour l'équipement de soudage (4) avec un retard allant jusqu'à 20 ms après le branchement ou le débranchement de l'équipement de transport (5).

0 177 992